# EUROPEAN PATENT APPLICATION

(11) **EP 3 933 760 A1**
(43) Date of publication of application: **05.01.2022**
(21) Application number: 20818691.6
(22) Date of filing: 25.05.2020
(51) Int. Cl.: G06T 7/00

(54) **IMAGE PROCESSING DEVICE, IMAGE PROCESSING PROGRAM, AND IMAGE PROCESSING METHOD**

(30) Priority: 07.06.2019 JP 2019107026
(71) Applicant: MAYEKAWA MFG. CO., LTD., Tokyo 135-8482 (JP)
(72) Inventor: UMINO Tatsuya, Tokyo 135-8482 (JP); KIMURA Kenichiro, Tokyo 135-8482 (JP)
(74) Representative: Stöckeler, Ferdinand
(86) International application number: PCT/JP2020/020532
(87) International publication number: WO 2020/246288

(57) **Abstract**

An image processing device acquires an image in which a subject having a predetermined posture and a predetermined shape is visualized, a first reference image in which the subject having a first posture of which a relationship with the predetermined posture is known and a first shape of which a relationship with the predetermined shape is known is visualized, and a second reference image in which the subject having at least one of a second posture different from the predetermined posture and a second shape different from the predetermined shape is visualized, extract feature data indicating a feature of the subject visualized in the image, extract first reference data indicating a feature of the subject visualized in the first reference image, extract second reference data indicating a feature of the subject visualized in the second reference image, identify a position at which the feature indicated by the feature data is located in the first reference image using the first reference data, and identify a position at which the feature indicated by the feature data is located in the subject having at least one of the second posture and the second shape using at least one of a relationship between the first posture and the second posture and a relationship between the first shape and the second shape.

## Description

### TECHNICAL FIELD

The present invention relates to an image processing device, an image processing program, and an image processing method.

### BACKGROUND ART

Recently, a technique of combining a stereoscopic image in which a subject is three-dimensionally visualized and an image in which the subject is visualized has been used in various fields. For example, Patent Literature 1 discloses a technique including a step of identifying a position of a transmission image at an inspection position in a radiographic image and a step of identifying the inspection position in a three-dimensional image from the position of the transmission image.

### [Citation List]

### [Patent Literature]

[Patent Literature 1]
Japanese Unexamined Patent Application, First Publication No. 2019-060808

However, in the technique described in Patent Literature 1, a plurality of transmission images are acquired while moving a substrate holding unit that holds a substrate which is a subject and a detector relative to a radiation generator, an inspection plane image is determined by identifying a position on a reconstructed image of an image of patterns or marks which are common to all the transmission images. That is, with the technique described in Patent Literature 1, an inspection plane image cannot be determined if there is no image of patterns or marks which are common to a plurality of transmission images.

On the other hand, for example, in the field of food processing, an image of a subject may be captured and the image may be required to be used after processing such as conveyance or cutting has been performed on the subject by a robot arm due to restrictions on a layout of a food processing line, production efficiency, or the like. At least one of a posture and a shape of the subject may change due to the processing and thus the image may not be able to be used.

### SUMMARY OF INVENTION

### Technical Problem

Therefore, an objective of the invention is to provide an image processing device, an image processing program, and an image processing method that can enable use of an image which is captured before at least one of a posture and a shape of a subject changes even after at least one of the posture and the shape of the subject has changed.

### Solution to Problem

(1) In order to achieve the aforementioned object, an image processing device according to an aspect of the invention includes: an acquisition unit that is configured to acquire an image in which a subject having a predetermined posture and a predetermined shape is visualized, a first reference image in which the subject having a first posture of which a relationship with the predetermined posture is known and a first shape of which a relationship with the predetermined shape is known is visualized, and a second reference image in which the subject having at least one of a second posture different from the predetermined posture and a second shape different from the predetermined shape is visualized; and an identification unit that is configured to extract feature data indicating a feature of the subject visualized in the image, extract first reference data indicating a feature of the subject visualized in the first reference image, extract second reference data indicating a feature of the subject visualized in the second reference image, identify a position at which the feature indicated by the feature data is located in the first reference image using the first reference data, and identify a position at which the feature indicated by the feature data is located in the subject having at least one of the second posture and the second shape using at least one of a relationship between the first posture of the subject derived from the first reference data and the second posture of the subject derived from the second reference data and a relationship between the first shape of the subject derived from the first reference data and the second shape of the subject derived from the second reference data.
(2) In the image processing device according to the aspect of (1), the identification unit may perform at least one of a process of identifying the first posture using the first reference data and a process of identifying the second posture using the second reference data.
(3) In the image processing device according to the aspect of (2), the identification unit may extract at least one of the first reference data indicating a feature of which the position in the subject is fixed even when a predetermined process is performed on the subject and the second reference data indicating a feature of which the position in the subject is fixed even when the predetermined process is performed on the subj ect.
(4) In the image processing device according to the aspect of (2) or (3), the identification unit may perform at least one of a process of extracting the first reference data indicating two first feature points located on a first straight line and a first feature point other than points located on the first straight line and a process of extracting the second reference data indicating two second feature points located on a second straight line and a second feature point other than points located on the second straight line.
(5) In order to achieve the aforementioned objective, an image processing program according to an aspect of the invention is configured to cause to perform: an acquisition function of acquiring an image in which a subject having a predetermined posture and a predetermined shape is visualized, a first reference image in which the subject having a first posture of which a relationship with the predetermined posture is known and a first shape of which a relationship with the predetermined shape is known is visualized, and a second reference image in which the subject having at least one of a second posture different from the predetermined posture and a second shape different from the predetermined shape is visualized; and an identification function of extracting feature data indicating a feature of the subject visualized in the image, extracting first reference data indicating a feature of the subject visualized in the first reference image, extracting second reference data indicating a feature of the subject visualized in the second reference image, identifying a position at which the feature indicated by the feature data is located in the first reference image using the first reference data, and identifying a position at which the feature indicated by the feature data is located in the subject having at least one of the second posture and the second shape using at least one of a relationship between the first posture of the subject derived from the first reference data and the second posture of the subject derived from the second reference data and a relationship between the first shape of the subject derived from the first reference data and the second shape of the subject derived from the second reference data.
(6) In order to achieve the aforementioned object, an image processing method according to an aspect of the invention includes: an acquisition step of acquiring an image in which a subject having a predetermined posture and a predetermined shape is visualized, a first reference image in which the subject having a first posture of which a relationship with the predetermined posture is known and a first shape of which a relationship with the predetermined shape is known is visualized, and a second reference image in which the subject having at least one of a second posture different from the predetermined posture and a second shape different from the predetermined shape is visualized; and an identification step of extracting feature data indicating a feature of the subject visualized in the image, extracting first reference data indicating a feature of the subject visualized in the first reference image, extracting second reference data indicating a feature of the subject visualized in the second reference image, identifying a position at which the feature indicated by the feature data is located in the first reference image using the first reference data, and identifying a position at which the feature indicated by the feature data is located in the subject having at least one of the second posture and the second shape using at least one of a relationship between the first posture of the subject derived from the first reference data and the second posture of the subject derived from the second reference data and a relationship between the first shape of the subject derived from the first reference data and the second shape of the subject derived from the second reference data.

### Advantageous Effects of Invention

According to the invention, it is possible to enable use of an image which is captured before at least one of a posture and a shape of a subject changes even after at least one of the posture and the shape of the subject has changed.

### BRIEF DESCRIPTION OF DRAWINGS

FIG. 1 is a diagram illustrating an example of a food processing line according to an embodiment of the invention.
FIG. 2 is a diagram illustrating an example of a functional configuration of an image processing device according to the embodiment of the invention.
FIG. 3 is a diagram illustrating an example of first feature points extracted from an X-ray image and first feature points extracted from a first stereoscopic image according to the embodiment of the invention.
FIG. 4 is a diagram illustrating an example of second feature points extracted from a second stereoscopic image according to the embodiment of the invention.
FIG. 5 is a diagram illustrating an example of an X-ray image in which a subject and features of the subject are visualized according to the embodiment of the invention.
FIG. 6 is a diagram illustrating an example of a first stereoscopic image in which a subject and features of the subject are visualized according to the embodiment of the invention.
FIG. 7 is a diagram illustrating an example of a second stereoscopic image in which a subject and features of the subject are visualized according to the embodiment of the invention.
FIG. 8 is a diagram illustrating an example of positions at which features indicated by feature data are located in the subject illustrated in FIG. 7.
FIG. 9 is a diagram illustrating an example of a second stereoscopic image in which a subject and features of the subject are visualized according to the embodiment of the invention.
FIG. 10 is a diagram illustrating an example of positions at which features indicated by feature data are located in the subject illustrated in FIG. 9.
FIG. 11 is a flowchart illustrating an example of a routine which is performed by the image processing device according to the embodiment of the invention.

### DESCRIPTION OF EMBODIMENTS

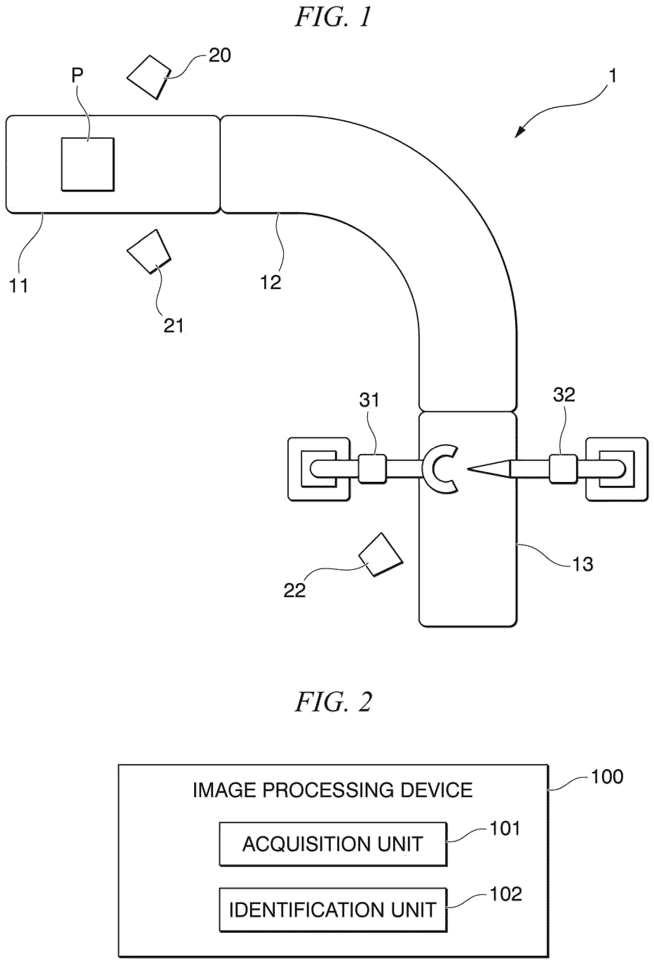

An image processing device according to an embodiment will be described below with reference to FIGS. 1 to 10. FIG. 1 is a diagram illustrating an example of a food processing line according to an embodiment of the invention. As illustrated in FIG. 1, the food processing line 1 includes a belt conveyer 11, a belt conveyer 12, a belt conveyer 13, an X-ray imaging device 20, a first stereoscopic imaging device 21, a second stereoscopic imaging device 22, an articulated robot 31, and an articulated robot 32. In the following description, it is assumed that a subject P is a pork ham including a pubis, a tailbone, and a hipbone corresponding to a human pelvis.

All of the belt conveyer 11, the belt conveyer 12, and the belt conveyer 13 rotate a belt to convey the subject P. All of the belt conveyer 11, the belt conveyer 12, and the belt conveyer 13 stop conveyance of the subject P by stopping the belt according to necessity. The belt conveyer 11 and the belt conveyer 13 are belt conveyers that convey the subject P straight ahead. On the other hand, the belt conveyer 12 is a belt conveyer that changes the direction in which the subject P is conveyed by 90 degrees.

The X-ray imaging device 20 applies X-rays to the subject P to capture an X-ray image of the subject P in a state in which a posture thereof does not change while conveying the subject P using the belt conveyer 11. The X-ray imaging device 20 includes an X-ray tube and an X-ray detector. The X-ray image is an example of an image in which the subject P having a predetermined posture and a predetermined shape is visualized, and visualizes at least meat and bones included in the subject P. The X-ray image is stored in a storage medium which is provided inside or outside the X-ray imaging device 20. A method of using the X-ray image will be described later. An X-ray shield facility that is provided to prevent leakage of X-rays and to protect an operator or facilities disposed around the operator is accessorily provided in the X-ray imaging device 20.

The first stereoscopic imaging device 21 captures a first stereoscopic image in which the subject P which has stopped on the belt conveyer 11 and which has the same posture and the same shape as the subject of which an X-ray image has been captured by the X-ray imaging device 20 is three-dimensionally visualized. The first stereoscopic image is an example of a first reference image in which a subject having a first posture of which a relationship with a predetermined posture is known and a first shape of which a relationship with a predetermined shape is known is visualized. The first stereoscopic image includes, for example, an image in which grey scales indicating depths in an X-axis direction are assigned to pixels, an image in which grayscale indicating depths in a Y-axis direction is assigned to the pixels, and an image in which grey scales indicating depths in a Z-axis direction are assigned to the pixels. The X axis, the Y axis, and the Z axis mentioned therein are coordinate axes defining a three-dimensional coordinate system. The first stereoscopic image is stored in a storage medium which is provided inside or outside the first stereoscopic imaging device 21 and the X-ray imaging device 20. A method of using the first stereoscopic image will be described later.

After capturing an X-ray image by the X-ray imaging device 20 and capturing of a first stereoscopic image by the first stereoscopic imaging device 21 have been completed, the subject P is conveyed by the belt conveyer 11 and the belt conveyer 12 and is placed on the belt conveyer 13.

The posture of the subject P placed on the belt conveyer 13 may be different from the posture of the subject P when capturing an X-ray image by the X-ray imaging device 20 and capturing of a first stereoscopic image by the first stereoscopic imaging device 21 are being performed. This is because the posture of the subject P changes due to vibration when the subject is conveyed to the belt conveyer 11, the belt conveyer 12, or the belt conveyer 13 and vibration when the subject gets over a joint between the belt conveyer 11 and the belt conveyer 12 and a joint between the belt conveyer 12 and the belt conveyer 13.

The second stereoscopic imaging device 22 captures a second stereoscopic image in which the subject P placed on the belt conveyer 13 is three-dimensionally visualized. The second stereoscopic imaging device 22 captures the second stereoscopic image in a state in which a process which is performed by at least one of the articulated robot 31 and the articulated robot 32 is temporarily stopped. The second stereoscopic image is an example of a second reference image in which a subject P having at least one of a second posture which is different from the predetermined posture and a second shape which is different from the predetermined shape is visualized. Similarly to the first stereoscopic image, the second stereoscopic image includes, for example, an image in which grey scales indicating depths in the X-axis direction are assigned to pixels, an image in which grey scales indicating depths in the Y-axis direction are assigned to the pixels, and an image in which grey scales indicating depths in the Z-axis direction are assigned to the pixels. The second stereoscopic image is captured at a position different from the position at which the X-ray image has been captured. A method of using the second stereoscopic image will be described later.

The articulated robot 31 is, for example, a vertical articulated robot and has a hand, which is used to hold the subject P, attached to a tip thereof. The articulated robot 32 is, for example, a vertical articulated robot and has a knife, which is used to cut meat included in the subject P, attached to a tip thereof. The articulated robot 31 appropriately adjusts the position and the posture of the subject P by holding or moving the subject P. The articulated robot 32 cuts the meat included in the subject P in a state in which the position and the posture of the subject P have been adjusted, and removes a tailbone or a hipbone from the subject P. The articulated robot 31 and the articulated robot 32 perform such processes, for example, on the basis of positions of feature points in the second stereoscopic image which are identified by an image processing device 100 which will be described later.

FIG. 2 is a diagram illustrating an example of a functional configuration of an image processing device according to the embodiment of the invention. As illustrated in FIG. 2, the image processing device 100 includes an acquisition unit 101 and an identification unit 102.

At least some functions of the image processing device 100, that is, the acquisition unit 101 and the identification unit 102, are realized by causing hardware including circuitry to execute a software program. Hardware mentioned herein is, for example, a central processing unit (CPU), a large scale integration (LSI), an application-specific integrated circuit (ASIC), a field-programmable gate array (FPGA), or a graphics processing unit (GPU). The program is stored in a storage device including a storage medium. A storage medium mentioned herein is, for example, a hard disk drive (HDD), a flash memory, a read only memory (ROM), or a digital versatile disc (DVD). The program may be a differential program that realizes some functions of the image processing device 100.

The acquisition unit 101 acquires an image in which the subject P having a predetermined posture and a predetermined shape is visualized. The acquisition unit 101 acquires a first reference image in which the subject having a first posture of which a relationship with the predetermined posture is known and a first shape of which a relationship with the predetermined shape is known is visualized. For example, the acquisition unit 101 acquires a first stereoscopic image in which the subject P having the same posture as the predetermined posture and the same shape as the predetermined shape is three-dimensionally visualized. The acquisition unit 101 acquires a second reference image in which the subject having at least one of a second posture different from the predetermined posture and a second shape different from the predetermined shape is visualized. For example, the acquisition unit 101 acquires a second stereoscopic image in which the subject P having a posture different from the predetermined posture is three-dimensionally visualized. The predetermined posture mentioned herein is, for example, a posture of the subject P when capturing of an X-ray image by the X-ray imaging device 20 and capturing of the first stereoscopic image by the first stereoscopic imaging device 21 are being performed.

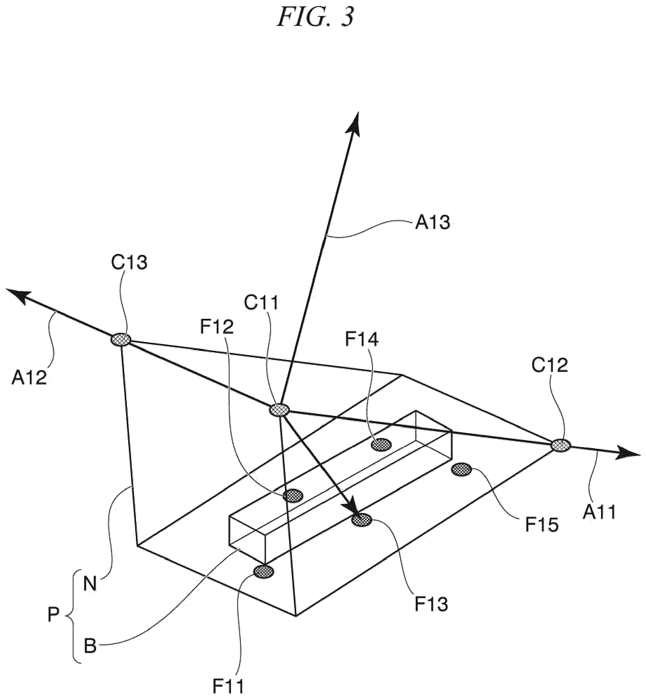

FIG. 3 is a diagram illustrating an example of feature points extracted from an X-ray image and first feature points extracted from a first stereoscopic image according to the embodiment of the invention. The identification unit 102 extracts feature data indicating features of the subject P visualized in the X-ray image. For example, the identification unit 102 extracts feature data indicating a feature point on the subject P visualized in the X-ray image. A feature point mentioned herein is, for example, a point indicating a feature in a shape of a boundary between a bone B and meat N of the subject P visualized in the X-ray image. For example, the identification unit 102 may extract feature data indicating a point F11, a point F12, a point F13, a point F14, and a point F15 illustrated in FIG. 3 as the feature points. A means which is used for the identification unit 102 to extract the feature data from the X-ray data is not particularly limited.

The identification unit 102 extracts first reference data indicating a feature of the subject P visualized in the first reference image. For example, the identification unit 102 extracts first reference data indicating a first feature point on the subject P visualized in the first stereoscopic image. First feature points mentioned herein include two points located on a first straight line and a point different from points located on the first straight line and are points located on the surface of the subject P. A first feature point is preferably a point of which a positional relationship with a feature point in the subject P does not change even when a predetermined process, for example, a process which is performed using the articulated robot 31 and the articulated robot 32, is performed on the subject P. Examples of such a point include a point located at an end of a tailbone cutting plane and a point located at an end of a pubis cutting plane. For example, the identification unit 102 extracts first reference data indicating a point C11, a point C12, and a point C13 illustrated in FIG. 3 as the first feature points. A means which is used for the identification unit 102 to extract the first reference data from the first stereoscopic image is not particularly limited.

Then, the identification unit 102 identifies a position at which a feature indicated by the feature data is located in the first reference image using the first reference data. For example, the identification unit 102 identifies a position of a feature point in the first stereoscopic image using the first feature points. Then, the identification unit 102 defines the point C11 illustrated in FIG. 3 as an origin, defines a coordinate axis extending from the point C11 to the point C12 as a first axis A11, and defines a coordinate axis extending from the point C11 to the point C13 as a second axis A12. The identification unit 102 determines a third axis A13 such that the first axis A11, the second axis A12, and the third axis A13 form a right-handed system. Then, the identification unit 102 calculates coordinates of the point F11, the point F12, the point F13, the point F14, and the point F15 in a three-dimensional coordinate system defined by the first axis A11, the second axis A12, and the third axis A13.

The identification unit 102 identifies a first posture of the subject P derived from the first reference data. Specifically, the identification unit 102 identifies the posture of the subject P indicated by the first stereoscopic image using the first reference data indicating the point C11, the point C12, and the point C13 illustrated in FIG. 3. The identification unit 102 identifies a first shape of the subject P derived from the first reference data. For example, the identification unit 102 identifies an outline of the subject P detected by performing edge detection on the first reference image as the first shape of the subject P.

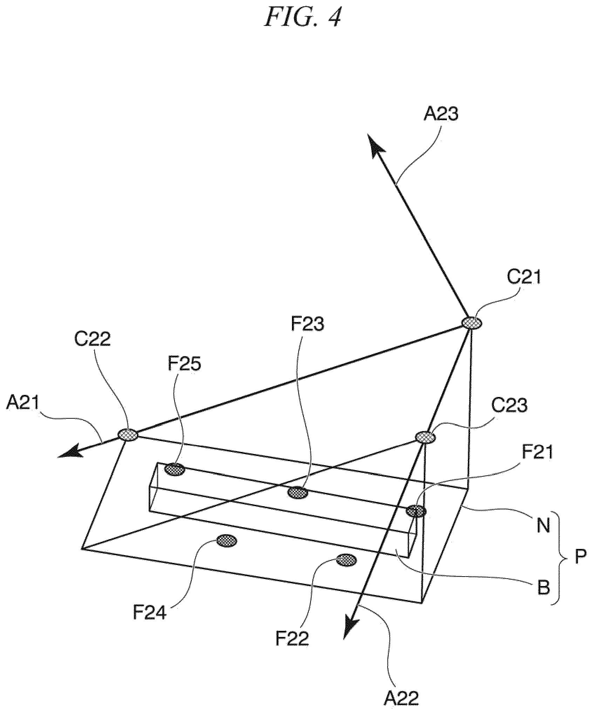

FIG. 4 is a diagram illustrating an example of second feature points extracted from a second stereoscopic image according to the embodiment of the invention. The identification unit 102 extracts second reference data indicating the feature of the subject P visualized in the second reference image. For example, the identification unit 102 extracts the second reference data indicating a second feature point on the subject P visualized in the second stereoscopic image. Second feature points mentioned herein include two points located on a second straight line and a point different from points located on the second straight line and are points located on the surface of the subject P. Similarly to the first feature point, a second feature point is preferably a point of which a positional relationship with a feature point in the subject P does not change even when a predetermined process, for example, a process which is performed using the articulated robot 31 and the articulated robot 32, is performed on the subject P. For example, the identification unit 102 extracts second reference data indicating a point C21, a point C22, and a point C23 illustrated in FIG. 4 as the second feature points. A means which is used for the identification unit 102 to extract the second reference data from the second stereoscopic image is not particularly limited.

The identification unit 102 defines the point C21 illustrated in FIG. 4 as an origin, defines a coordinate axis extending from the point C21 to the point C22 as a first axis A21, and defines a coordinate axis extending from the point C21 to the point C23 as a second axis A22. The identification unit 102 determines a third axis A23 such that the first axis A21, the second axis A22, and the third axis A23 form a right-handed system.

The identification unit 102 identifies a second posture of the subject P derived from the second reference data. Specifically, the identification unit 102 identifies the posture of the subject P indicated by the second stereoscopic image using the second reference data indicating the point C21, the point C22, and the point C23 illustrated in FIG. 4. The identification unit 102 identifies a second shape of the subject P derived from the second reference data. For example, the identification unit 102 identifies an outline of the subject P detected by performing edge detection on the second reference image as the second shape of the subject P.

Then, the identification unit 102 identifies a position at which a feature indicated by feature data is located in the subject P having at least one of the second posture and the second shape. At this time, the identification unit 102 uses at least one of a relationship between the first posture of the subject P derived from the first reference data and the second posture of the subject P derived from the second stereoscopic image and a relationship between the first shape of the subject P derived from the first reference data and the second shape of the subject P derived from the second reference data. In this case, the position identified by the identification unit 102 may be a position on the second reference image or may be a position on the X-ray image of the subject having at least one of the second posture and the second shape.

For example, the identification unit 102 derives a correspondence between a three-dimensional coordinate system defined by the first axis A11, the second axis A12, and the third axis A13 and a three-dimensional coordinate system defined by the first axis A21, the second axis A22, and the third axis A23. Then, the identification unit 102 converts the point F11, the point F12, the point F13, the point F14, and the point F15 illustrated in FIG. 3 to a point F21, a point F22, a point F23, a point F24, and a point F25 in the three-dimensional coordinate system defined by the first axis A21, the second axis A22, and the third axis A23 illustrated in FIG. 4 using the correspondence. The point F21, the point F22, the point F23, the point F24, and the point F25 serve as references when the articulated robot 31 and the articulated robot 32 perform the aforementioned process.

Examples of positions at which feature of the subject P indicated by the feature data, a feature of the subject P indicated by the first reference data, a feature of the subject P indicated by the second reference data, and a feature indicated by the feature data of the subject P having at least one of the second posture and the second shape are located will be described below.

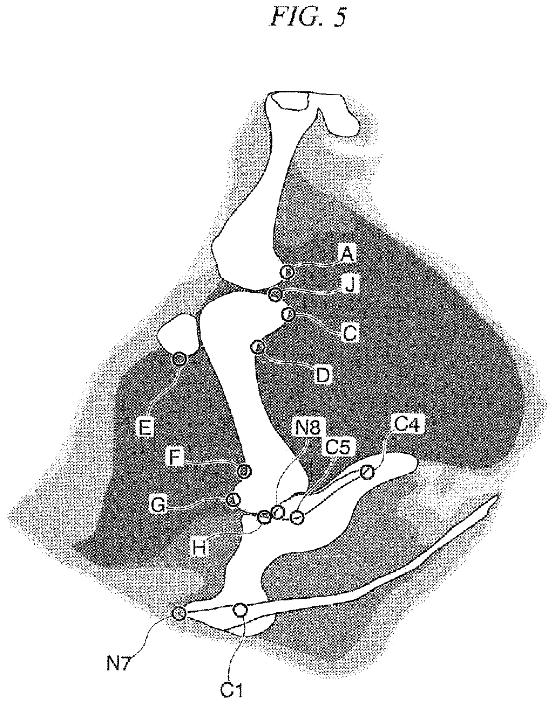

FIG. 5 is a diagram illustrating an example of an X-ray image in which a subject and features of the subject are visualized according to the embodiment of the invention. The subject illustrated in FIG. 5 includes bones and meat sticking to the bones. A point A, a point J, a point C, a point D, a point E, a point F, a point G, a point H, a point N8, a point C5, a point C4, a point N7, and a point C1 illustrated in FIG. 5 are all examples of feature points indicated by feature data.

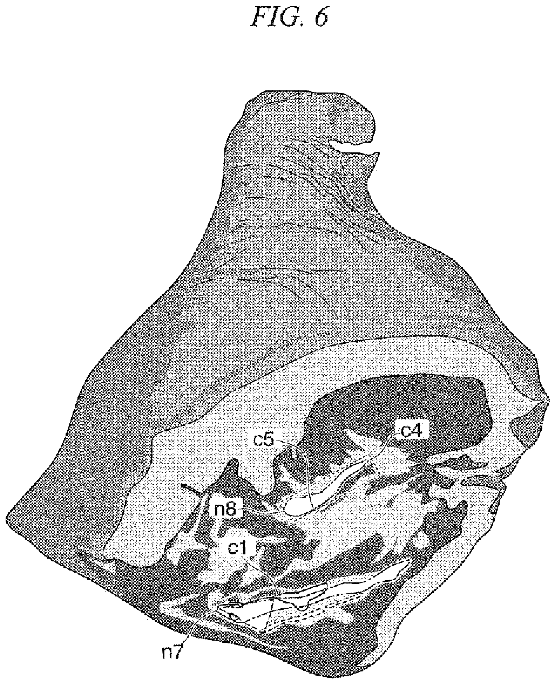

FIG. 6 is a diagram illustrating an example of a first stereoscopic image in which a subject and features of the subject are visualized according to the embodiment of the invention. The first stereoscopic image illustrated in FIG. 6 is an image in which a three-dimensional outline of the same subject as illustrated in FIG. 5 with the same posture and the same shape as the subject is visualized. A point c1, a point c4, a point c5, a point n7, and a point n8 in FIG. 6 are all examples of first feature points indicated by first reference data and are points on a cross-section of bones located on the surface of the subject.

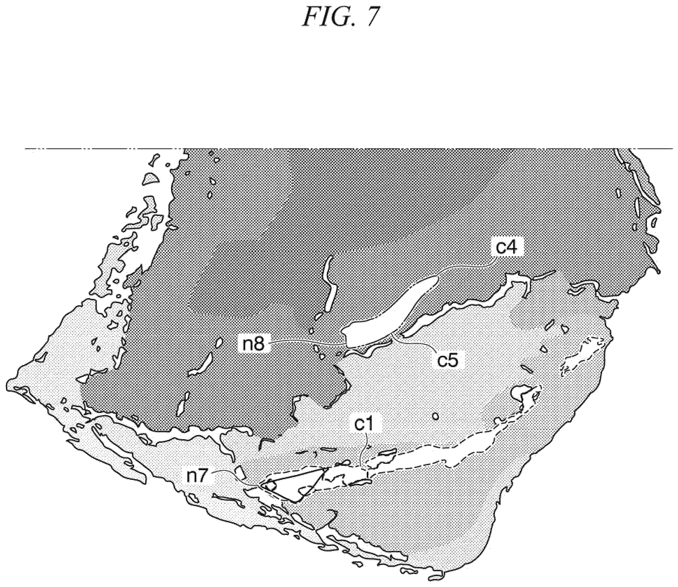

FIG. 7 is a diagram illustrating an example of a second stereoscopic image in which a subject and features of the subject are visualized according to the embodiment of the invention. The second stereoscopic image illustrated in FIG. 7 is an image in which a three-dimensional outline of the same subject as illustrated in FIGS. 5 and 6 with a posture and a shape of the subject which are different those of the subject is visualized. A point c1, a point c4, a point c5, a point n7, and a point n8 in FIG. 7 are all examples of second feature points indicated by second reference data and are points on a cross-section of bones located on the surface of the subject.

The point c1, the point n7, and the point n8 illustrated in FIG. 7 are correlated with the point c1, the point n7, and the point n8 illustrated in FIG. 6 by feature-based matching using three feature points. The correlation of the three points determines a relationship between the posture and the shape of the subject visualized in the first stereoscopic image illustrated in FIG. 6 and the posture and the shape of the subject visualized in the second stereoscopic image illustrated in FIG. 7. The feature-based matching is a technique of extracting features such as edges or corners from a plurality of images and performing matching between the plurality of images on the basis of the relationship between the features.

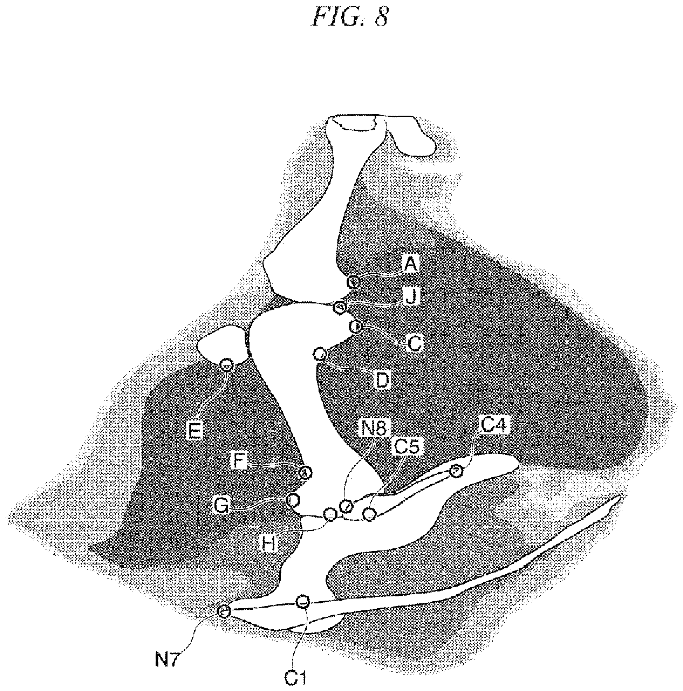

FIG. 8 is a diagram illustrating an example of positions at which features indicated by feature data are located in the subject illustrated in FIG. 7. The image illustrated in FIG. 8 is an X-ray image in which the same subject as illustrated in FIG. 7 with the same posture and the same shape as the subject is visualized. A point A, a point J, a point C, a point D, a point E, a point F, a point G, a point H, a point N8, a point C5, a point C4, a point N7, and a point C1 illustrated in FIG. 8 are the same as the point A, the point J, the point C, the point D, the point E, the point F, the point G, the point H, the point N8, the point C5, the point C4, the point N7, and the point C1 illustrated in FIG. 5.

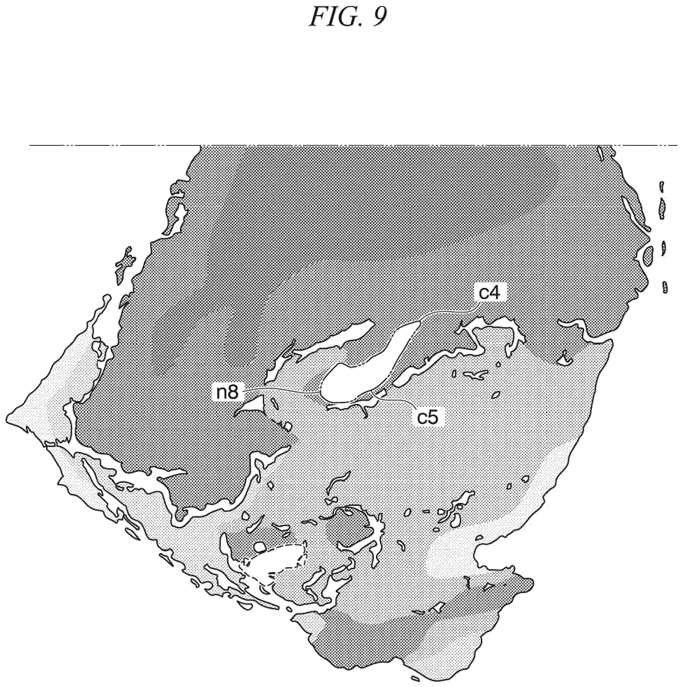

FIG. 9 is a diagram illustrating an example of a second stereoscopic image in which a subject and features of the subject are visualized according to the embodiment of the invention. The second stereoscopic image illustrated in FIG. 9 is an image in which a three-dimensional outline of the same subject as illustrated in FIGS. 5 and 6 with a posture and a shape which are different from those of the subject is visualized. The subject visualized in the second stereoscopic image illustrated in FIG. 9 has a larger change in posture and a larger change in shape from the subject illustrated in FIG. 5 than from the subject visualized in the second stereoscopic image illustrated in FIG. 7. A point c4, a point c5, and a point n8 illustrated in FIG. 9 are all examples of second feature points indicated by second reference data and are points on a cross-section of bones located on the surface of the subject.

The point c4, the point c5, and the point n8 illustrated in FIG. 9 are correlated with the point c4, the point c5, and the point n8 illustrated in FIG. 6 by feature-based matching using three feature points. The correlation of the three points determines a relationship between the posture and the shape of the subject visualized in the first stereoscopic image illustrated in FIG. 6 and the posture and the shape of the subject visualized in the second stereoscopic image illustrated in FIG. 9.

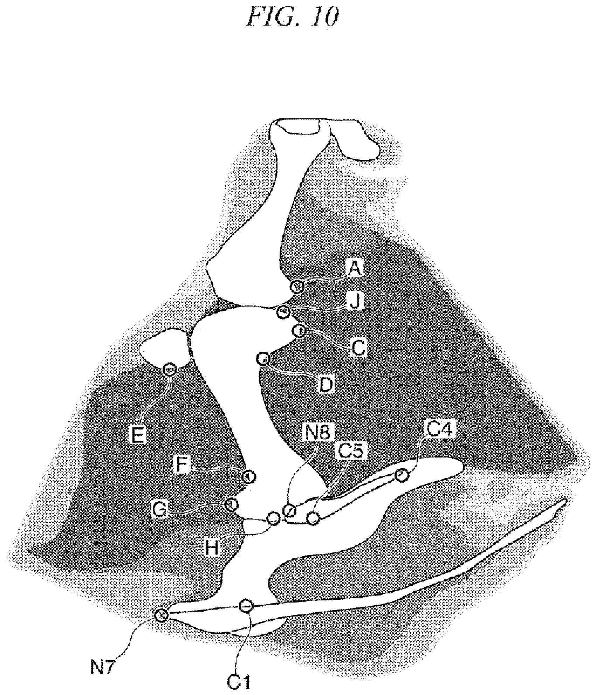

FIG. 10 is a diagram illustrating an example of positions at which features indicated by feature data are located in the subject illustrated in FIG. 9. The image illustrated in FIG. 10 is an X-ray image in which the same subject as illustrated in FIG. 9 with the same posture and the same shape as the subject is visualized. A point A, a point J, a point C, a point D, a point E, a point F, a point G, a point H, a point N8, a point C5, a point C4, a point N7, and a point C1 illustrated in FIG. 10 are the same as the point A, the point J, the point C, the point D, the point E, the point F, the point G, the point H, the point N8, the point C5, the point C4, the point N7, and the point C1 illustrated in FIG. 5.

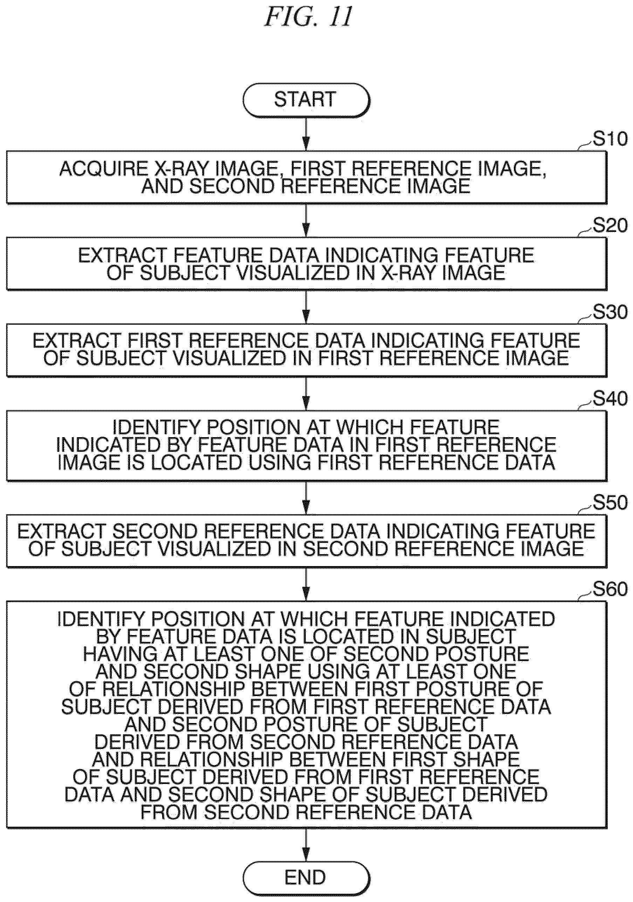

An example of a routine which is performed by the image processing device according to the embodiment will be described below with reference to FIG. 11. FIG. 11 is a flowchart illustrating an example of a routine which is performed by the image processing device according to the embodiment of the invention. The image processing device 100 performs the routine illustrated in FIG. 11 before processes using the articulated robot 31 and the articulated robot 32 are performed. The image processing device 100 may temporarily stop the processes using the articulated robot 31 and the articulated robot 32 and perform the routine illustrated in FIG. 11.

In Step S10, the acquisition unit 101 acquires an X-ray image, a first reference image, and a second reference image.

In Step S20, the identification unit 102 extracts feature data indicating a feature of a subject P visualized in the X-ray image.

In Step S30, the identification unit 102 extracts first reference data indicating a feature of the subject P visualized in a first reference image.

In Step S40, the identification unit 102 identifies a position at which the feature indicated by the feature data is located in the first reference image using the first reference data.

In Step S50, the identification unit 102 extracts second reference data indicating a feature of the subject P visualized in a second reference image.

In Step S60, the identification unit 102 identifies a position at which the feature indicated by the feature data is located in the subject having at least one of a second posture and a second shape using at least one of a relationship between the first posture of the subject P derived from the first reference data and the second posture of the subject P derived from the second reference data and a relationship between the first shape of the subject P derived from the first reference data and the second shape of the subject P derived from the second reference data.

The image processing device 100 according to the embodiment has been described above. The image processing device 100 extracts feature data from a subject P visualized in an image, extracts first reference data from the subject P visualized in a first reference image, and extracts second reference data from the subject P visualized in a second reference image. The image processing device 100 identifies a position at which a feature indicated by the feature data is located in the first reference image using the first reference data. The image processing device 100 identifies a position at which the feature indicated by the feature data is located in the subject P having at least one of a second posture and a second shape using at least one of a relationship between the first posture of the subject P and the second posture of the subject P and a relationship between the first shape of the subject P and the second shape of the subject P.

The image processing device 100 identifies the first posture of the subject P visualized in the first reference image using the first reference data and identifies the second posture of the subject P visualized in the second reference image. In addition, the image processing device 100 extracts the first reference data indicating two first feature points located on a first straight line and a first feature point other than points located on the first straight line and extracts the second reference data indicating two second feature points located on a second straight line and a second feature point other than points located on the second straight line.

Accordingly, the image processing device 100 can enable use of an image captured before at least one of the posture and the shape of the subject P has changed even after at least one of the posture and the shape of the subject has changed. Accordingly, when the image processing device 100 applies to the food processing line 1, it is possible to improve a degree of freedom in layout of the food processing line 1. That is, with the image processing device 100, it is possible to decrease the number of X-ray imaging devices or the number of facilities for blocking X-rays.

The image processing device 100 extracts at least one of the first feature point of which the position in the subject P does not change even when a predetermined process is performed on the subject P and the second feature point of which the position in the subject P does not change even when a predetermined process is performed on the subject P. Accordingly, the image processing device 100 can more accurately extract the first feature point or the second feature point even when a predetermined process is performed on the subject P and the shape, the position, the posture, and the like of the subject P change, and more accurately perform processes using the first feature point or the second feature point.

In the aforementioned embodiment, an example in which the image processing device 100 extracts feature data from an X-ray image in which a subject P having a predetermined posture and a predetermined shape is visualized has been described above, but the invention is not limited thereto. The image processing device 100 may extract feature data from a computed tomography (CT) image obtained by imaging the subject P using an X-ray CT device or a magnetic resonance imaging (MRI) image obtained by imaging the subject P using an MRI device instead of an X-ray image captured using the X-ray imaging device 20. Alternatively, the image processing device 100 may extract feature data from an ultrasonic image, an infrared image, a microwave image, an ultraviolet image, or a terahertz image which is obtained by imaging the subject P.

An imaging device such as the X-ray imaging device 20 that captures an image from which feature data is extracted is preferably installed at only one place on the food processing line 1 even when a place at which at least one of a posture and a shape of a subject P changes is different from a place at which the image is captured. This is because the total management cost increases and a processing load for generating an image increases when a plurality of imaging devices are installed in the food processing line 1, whereby production efficiency decreases.

When such an imaging device outputs radiation, the food processing line 1 needs to be provided with a facility for blocking the radiation such that actuators which are used for robots such as the articulated robot 31 and the articulated robot 32 do not operate unexpectedly due to the radiation. Accordingly, it is necessary to secure an installation space of the facility in the food processing line 1 and the management cost of the facility is added to the total management cost. When the facility for blocking radiation includes a material such as lead which should not be mixed into food, it is difficult to install the facility in the food processing line 1.

In the aforementioned embodiment, an example in which a place at which the first stereoscopic image is captured and a place at which the second stereoscopic image is captured are different from each other has been described above, but the invention is not limited thereto. That is, the place at which the first stereoscopic image is captured and the place at which the second stereoscopic image is captured may be the same.

In the aforementioned embodiment, an example in which the first stereoscopic image is captured by the first stereoscopic imaging device 21 and the second stereoscopic image is captured by the second stereoscopic imaging device 22 has been described above, but the invention is not limited thereto. That is, the first stereoscopic image and the second stereoscopic image may be captured by the same imaging device.

In the aforementioned embodiment, an example in which the feature data is data indicating feature points on the subject P has been described above, but the invention is not limited thereto. For example, the feature data may be data indicating a feature area which is a featured area located on the subject P visualized in an X-ray image or a feature shape which is a featured shape of the subject P.

In the aforementioned embodiment, an example in which the first reference data is data indicating first feature points on the subject P has been described above, but the invention is not limited thereto. For example, the first reference data may be data indicating a first feature area which is a featured area located on the subject P visualized in a first reference image or a first feature shape which is a featured shape of the subject P.

In the aforementioned embodiment, an example in which the second reference data is data indicating second feature points on the subject P has been described above, but the invention is not limited thereto. For example, the second reference data may be data indicating a second feature area which is a featured area located on the subject P visualized in a second reference image or a second feature shape which is a featured shape of the subject P.

In the aforementioned embodiment, an example in which the first reference image is the first stereoscopic image has been described above, but the invention is not limited thereto. That is, the first reference image may be an image other than the first stereoscopic image in which the subject P is three-dimensionally visualized.

In the aforementioned embodiment, an example in which the second reference image is the second stereoscopic image has been described above, but the invention is not limited thereto. That is, the second reference image may be an image other than the second stereoscopic image in which the subject P is three-dimensionally visualized.

In the aforementioned embodiment, an example in which the first feature points and the second feature points are correlated by applying feature-based matching to the first stereoscopic image and the second stereoscopic image has been described above, but the invention is not limited thereto. The image processing device 100 may correlate the first feature points and the second feature points by applying area-based matching to the first stereoscopic image and the second stereoscopic image. The area-based matching is a technique of searching for a similar area between a plurality of images and matching the plurality of images using the similar area.

An embodiment of the invention has been described above with reference to the drawings. Here, the image processing device 100 is not limited to the embodiment and can be subjected to various modifications, substitutions, combinations, or changes in design without departing from the gist of the invention.

### REFERENCE SIGNS LIST

100... Image processing device, 101... Acquisition unit, 102... Identification unit

## Claims

1. An image processing device comprising:
an acquisition unit that is configured to acquire an image in which a subject having a predetermined posture and a predetermined shape is visualized, a first reference image in which the subject having a first posture of which a relationship with the predetermined posture is known and a first shape of which a relationship with the predetermined shape is known is visualized, and a second reference image in which the subject having at least one of a second posture different from the predetermined posture and a second shape different from the predetermined shape is visualized; and
an identification unit that is configured to extract feature data indicating a feature of the subject visualized in the image, extract first reference data indicating a feature of the subject visualized in the first reference image, extract second reference data indicating a feature of the subject visualized in the second reference image, identify a position at which the feature indicated by the feature data is located in the first reference image using the first reference data, and identify a position at which the feature indicated by the feature data is located in the subject having at least one of the second posture and the second shape using at least one of a relationship between the first posture of the subject derived from the first reference data and the second posture of the subject derived from the second reference data and a relationship between the first shape of the subject derived from the first reference data and the second shape of the subject derived from the second reference data.

2. The image processing device according to claim 1, wherein the identification unit is configured to perform at least one of a process of identifying the first posture using the first reference data and a process of identifying the second posture using the second reference data.

3. The image processing device according to claim 2, wherein the identification unit is configured to extract at least one of the first reference data indicating a feature of which the position in the subject is fixed even when a predetermined process is performed on the subject and the second reference data indicating a feature of which the position in the subject is fixed even when the predetermined process is performed on the subj ect.

4. The image processing device according to claim 2 or 3, wherein the identification unit is configured to perform at least one of a process of extracting the first reference data indicating two first feature points located on a first straight line and a first feature point other than points located on the first straight line and a process of extracting the second reference data indicating two second feature points located on a second straight line and a second feature point other than points located on the second straight line.

5. An image processing program causing a computer to perform:
an acquisition function of acquiring an image in which a subject having a predetermined posture and a predetermined shape is visualized, a first reference image in which the subject having a first posture of which a relationship with the predetermined posture is known and a first shape of which a relationship with the predetermined shape is known is visualized, and a second reference image in which the subject having at least one of a second posture different from the predetermined posture and a second shape different from the predetermined shape is visualized; and
an identification function of extracting feature data indicating a feature of the subject visualized in the image, extracting first reference data indicating a feature of the subject visualized in the first reference image, extracting second reference data indicating a feature of the subject visualized in the second reference image, identifying a position at which the feature indicated by the feature data is located in the first reference image using the first reference data, and identifying a position at which the feature indicated by the feature data is located in the subject having at least one of the second posture and the second shape using at least one of a relationship between the first posture of the subject derived from the first reference data and the second posture of the subject derived from the second reference data and a relationship between the first shape of the subject derived from the first reference data and the second shape of the subject derived from the second reference data.

6. An image processing method comprising:
an acquisition step of acquiring an image in which a subject having a predetermined posture and a predetermined shape is visualized, a first reference image in which the subject having a first posture of which a relationship with the predetermined posture is known and a first shape of which a relationship with the predetermined shape is known is visualized, and a second reference image in which the subject having at least one of a second posture different from the predetermined posture and a second shape different from the predetermined shape is visualized; and
an identification step of extracting feature data indicating a feature of the subject visualized in the image, extracting first reference data indicating a feature of the subject visualized in the first reference image, extracting second reference data indicating a feature of the subject visualized in the second reference image, identifying a position at which the feature indicated by the feature data is located in the first reference image using the first reference data, and identifying a position at which the feature indicated by the feature data is located in the subject having at least one of the second posture and the second shape using at least one of a relationship between the first posture of the subject derived from the first reference data and the second posture of the subject derived from the second reference data and a relationship between the first shape of the subject derived from the first reference data and the second shape of the subject derived from the second reference data.
